# EUROPÄISCHE PATENTSCHRIFT

(11) **EP 4 308 882 B1**
(45) Veröffentlichungstag und Bekanntmachung des Hinweises auf die Patenterteilung: **11.12.2024**
(21) Anmeldenummer: 22710047.6
(22) Anmeldetag: 02.03.2022
(51) Int. Cl.: G01D 5/20

(54) **POSITIONSERFASSUNG FÜR EINEN DREHWINKELSENSOR**
POSITION DETECTION FOR A ROTATION ANGLE SENSOR
DÉTECTION DE POSITION POUR UN CAPTEUR D'ANGLE DE ROTATION

(30) Priorität: 19.03.2021 DE 102021106870
(43) Veröffentlichungstag der Anmeldung: 24.01.2024
(73) Patentinhaber: HELLA GmbH & Co. KGaA, 59552 Lippstadt (DE)
(72) Erfinder: IRLE, Henning, 59557 Lippstadt (DE)
(74) Vertreter: Behr-Wenning, Gregor
(86) Internationale Anmeldenummer: PCT/EP2022/055280
(87) Internationale Veröffentlichungsnummer: WO 2022/194557

(56) Entgegenhaltungen:
- WO-A1-2019/185336

## Beschreibung

Die vorliegende Erfindung betrifft eine Positionserfassungsvorrichtung für einen Drehwinkelsensor, einen Drehwinkelsensor mit einer derartigen Positionserfassungsvorrichtung sowie ein System mit einem solchen Drehwinkelsensor.

Drehwinkelsensoren werden z.B. in Kraftfahrzeugen eingesetzt. Zum Beispiel werden in Kraftfahrzeugen vermehrt elektromotorische Servoeinrichtungen zur Lenkhilfe eingesetzt. Diese benötigen das Lenkmoment zur Steuerung. Die Lenkmomente werden in einer Lenksäule durch einen Torsionsstab in Differenzwinkeln erkennbar und aus diesen berechnet. Genauer gesagt werden Verdrehungen an Enden des Torsionsstabs mittels Drehwinkelsensoren bestimmt und daraus Differenzwinkel abgeleitet. Die Differenzwinkel, die durch die Torsion bewirkt werden, sind unabhängig von einer Stellung des Lenkrads zu bestimmen. In heutigen elektrischen Servolenkungen werden als Mensch-Maschine-Schnittstelle, auch HMI (Human-Maschine-Interface) genannt, Drehmomentsensoren eingesetzt. Hierüber wird die "Kraft", die der Fahrer auf das Lenkrad aufbringt, gemessen, so dass eine Lenkunterstützung erfolgen kann. Auch zukünftig, bei Entfall der Lenksäule und dem Etablieren der so genannten Steer-by-Wire Systeme, werden Sensoren für Lenkwinkel und ggf. Lenkmoment an der Antriebseinheit der Lenkung oder dem "Hand Wheel Sensor & Actuator" notwendig sein.

Ferner ist es z.B. für Fahrerassistenzsysteme wie ESP (elektronisches Stabilitätsprogramm für das Fahrverhalten des Fahrzeugs) von Bedeutung, die Stellung (relative Winkelposition) des Lenkrads zu kennen. Hierfür wird ein Einschlag des Lenkrads (Winkel relativ zu einer Referenzposition) bestimmt. Damit auch Winkel größer oder kleiner als 360° bestimmt werden können, ist der Referenzposition eine Indexierung zugeordnet.

Bei magnetischen Drehmomentsensoren ist es beispielsweise bekannt, zur Indexierung mittels eines Hallsensors und eines zugeordneten Magneten für jede vollständige Umdrehung des Lenkrads ein Signal zu erzeugen und so eine Anzahl an Umdrehungen zu bestimmen. Verwendet wird hierbei ein oft als magnetische Jalousie bezeichnetes Verfahren, bei dem eine Änderung der magnetischen Flussdichte bei der Verdrehung erfolgt. Zugehörige Sensoren werden auch als Torque Only Sensoren (TOS) bezeichnet. Diese Sensoren sind nicht in der Lage einen Lenkwinkel zu erfassen.

Beispiele für solche Drehmomentsensoren werden in der EP 1 269 133 B1 und der US 7,644,635 B2 beschrieben.

Derartige Vorrichtungen zur Bestimmung eines Drehwinkels und/oder eines Drehmoments eines sich drehenden Teils sowie Verfahren zu deren Betrieb sind aus dem Stand der Technik in zahlreichen Ausführungsvarianten bereits bekannt. Generell sind Sensoren bekannt, die sowohl das Drehmoment am Lenkrad als auch den Lenkwinkel messen.

Aus der DE 10 2004 019 379 A1 ist ein Verfahren zum Ermitteln eines Differenzwinkels bekannt, bei dem zwei Drehwinkel bestimmt und hieraus ein Differenzwinkel berechnet wird. Beim Berechnen des Differenzwinkels werden unterschiedliche Übersetzungsverhältnisse zwischen den Drehungen zweier Komponenten berücksichtigt. Eine Vielzahl von Umdrehungen bleibt unberücksichtigt.

Aus der EP 2 383 558 A1 ist ein induktiver Winkelsensor zur Bestimmung von Drehmoment und relativer Winkelstellung bezüglich einer Referenzposition, umfassend Mittel zum Erfassen von Winkeln und Differenzwinkeln sowie Mittel zum Indexieren bei Durchfahren der Referenzposition mit einem Dauermagneten und einem Hall-Sensor bekannt. Um einen preiswert und kompakt herstellbaren Drehmomentsensor mit Winkelbestimmung und Indexierung zu schaffen, wird dem Hall-Sensor ein Flussleitblech zugeordnet, das in der Referenzposition den Fluss des Dauermagneten zu dem Hall-Sensor leitet.

Aus der WO2019/185338 A1 ist eine Vorrichtung zur Bestimmung eines Drehwinkels und/oder eines Drehmoments eines sich drehenden Teils bekannt. Die Vorrichtung umfasst mindestens ein Winkelerfassungsmittel zur Erfassung einer Winkelstellung des sich drehenden Teils relativ zu einer Referenzposition und mindestens ein Indexierungsmittel zum Indexieren bei einer vorher festgelegten Drehung, bevorzugt einer 360°- Drehung, des drehenden Teils relativ zu der Referenzposition. Das Winkelerfassungsmittel weist einen mit dem drehenden Teil drehfest verbundenen Rotor mit einem Grundkörper zur Befestigung an dem drehenden Teil und mehreren sich von dem Grundkörper radial nach außen erstreckenden Flügeln auf. Mindestens einer der Flügel des Rotors weist eine mittels des Indexierungsmittels detektierbare Markierung auf.

Mit Hilfe derartiger Indexierungen ist es möglich, auf eine absolute Bestimmung des Lenkwinkels über den Messbereich von typischerweise 1440° zu verzichten. Vielmehr wird mittels der Indexierung eine Art kontaktloser Schalter hinzugefügt, der im Falle des Geradeausfahrens ein Schaltsignal (Indexsignal/Index-Signal) erzeugt. Bisherige Ausführungen des Indexschalters sind magnetisch, bedingen einen zusätzlichen Magneten und einen zusätzlichen integrierten Schaltkreis. Bezüglich der Beeinflussung durch Fremdfelder sind sie wenig robust.

WO 2019/185336 A1 offenbart eine Vorrichtung zur Bestimmung eines Drehwinkels eines Rotors.

In Anbetracht dessen besteht ein Bedürfnis nach einer verbesserten Technologie zur Indexierung und/oder zur Ermittlung von Drehwinkeln. Hierfür werden eine Positionserfassungsvorrichtung für einen Drehwinkelsensor nach Anspruch 1, ein Drehwinkelsensor nach Anspruch 11 mit einer derartigen Positionserfassungsvorrichtung sowie ein System nach Anspruch 13 mit einem solchen Drehwinkelsensor angegeben. Spezifische Ausführungsbeispiele der Positionserfassungsvorrichtung ergeben sich aus den abhängigen Ansprüchen 2 bis 10. Ein spezielles Ausführungsbeispiel des Drehwinkelsensors ergibt sich aus dem abhängigen Anspruch 12.

Gemäß einem ersten Aspekt der Erfindung wird eine Positionserfassungsvorrichtung für einen Drehwinkelsensor bereitgestellt. Die Positionserfassungsvorrichtung weist mindestens einen Stator, mindestens einen Rotor und mindestens eine Auswerteeinheit auf. Der mindestens eine Rotor weist einen Grundkörper und mehrere sich von dem Grundkörper radial nach außen erstreckende Rotorflügel auf. Mehrere erste Rotorflügel der mehreren Rotorflügel sind von mehreren zweiten Rotorflügeln der mehreren Rotorflügel verschieden ausgebildet. Die Auswerteeinheit ist ausgebildet, zu erfassen, wenn die mehreren ersten Rotorflügel, beispielsweise ausgehend von einer Referenzposition, eine vorbestimmte Drehposition erreichen, erreicht haben oder überschreiten.

Hierfür muss die Auswerteeinheit nicht für jeden der mehreren ersten Rotorflügel erfassen, wenn der jeweilige erste Rotorflügel eine vorbestimmte Drehposition erreicht, erreicht hat oder überschreitet. Indem beispielsweise erfasst wird, dass einer der mehreren ersten Rotorflügel die vorbestimmte Drehposition erreicht, erreicht hat oder überschreitet, kann abgeleitet werden, dass alle der mehreren ersten Rotorflügel sich jeweils um den gleichen Betrag oder Winkel bewegt oder gedreht haben.

Beispielsweise kann die Auswerteeinheit ausgebildet sein, zu erfassen, wenn die Gesamtheit der mehreren ersten Rotorflügel, beispielsweise ausgehend von einer Referenzposition, eine vorbestimmte Drehposition erreicht, erreicht hat oder überschreitet.

Der mindestens eine Stator kann ortsfest relativ zu einem drehenden Element angeordnet sein. Auf dem mindestens einen Stator können Segmente angeordnet sein, die jeweils den mehreren ersten Rotorflügeln und den mehreren zweiten Rotorflügeln entsprechen. Der mindestens eine Rotor kann drehfest mit dem drehenden Element verbindbar sein. Die mehreren ersten Rotorflügel können jeweils identisch ausgebildet sein. Die mehreren zweiten Rotorflügel können jeweils identisch ausgebildet sein.

Die Auswerteeinheit kann ausgebildet sein, basierend auf einer kapazitiven Kopplung zwischen dem mindestens einen Rotor und dem mindestens einen Stator, zu erfassen, wenn die mehreren ersten Rotorflügel, ausgehend von einer Referenzposition, eine vorbestimmte Drehposition erreichen, erreicht haben oder überschreiten. Gemäß einer Ausgestaltung ist die Auswerteeinheit ausgebildet, anhand der kapazitiven Kopplung nicht den genauen Drehwinkel des mindestens einen Rotorflügels zu ermitteln, sondern zu erfassen, wenn die mehreren ersten Rotorflügel, ausgehend von einer Referenzposition, die vorbestimmte Drehposition erreichen, erreicht haben oder überschreiten. Die vorbestimmte Drehposition kann beispielsweise eine einzige feste Position bezogen auf den Umfang des Stators und/oder des Rotors sein. Beispielsweise kann die vorbestimmte Drehposition der Referenzposition entsprechen. Gemäß diesem Beispiel kann nach jedem vollständigen Umlauf der mehreren ersten Rotorflügel, z. B. der Gesamtheit der mehreren ersten Rotorflügel, die vorbestimmte Drehposition wieder erreicht werden. Gemäß einem anderen Beispiel kann die vorbestimmte Drehposition einem Drehwinkelsegment entsprechen. Das Drehwinkelsegment kann kleiner sein als 360° sein.

Es kann daher davon gesprochen werden, dass die Positionserfassungsvorrichtung gemäß dem ersten Aspekt kapazitiv arbeitet. Dabei fungiert der mindestens eine Rotor als mindestens eine Elektrode und fungiert der mindestens eine Stator als eine zugehörige Elektrode. Der mindestens eine Rotor und der mindestens eine Stator können dabei auf einem unterschiedlichen Potential liegen. Zwischen dem mindestens einen Rotor und dem mindestens Stator kann es dadurch zum Ausbilden eines elektrischen Feldes kommen. Der Kapazitätswert einer Kapazität und damit die Stärke des elektrischen Feldes ist abhängig von verschiedenen Parametern. Unter anderem ist die Stärke des elektrischen Feldes zwischen dem mindestens einen Rotor und dem mindestens einen Stator von dem zwischen dem mindestens einen Rotor und dem mindestens einen Stator liegenden Material und/oder von dem Abstand der jeweiligen Elektroden voneinander abhängig. Ferner ist der Kapazitätswert einer Kapazität und damit die Stärke des elektrischen Feldes abhängig von den kapazitiv wirksamen überlappenden Elektrodenflächen. Durch Änderung der Überlappung der Elektrodenflächen ändert sich der Kapazitätswert. Je größer die Überlappung der Elektrodenflächen, desto größer ist der Kapazitätswert. Je geringer die Überlappung der Elektrodenflächen, desto geringer der Kapazitätswert.

Die kapazitive Ausgestaltung der Positionserfassungsvorrichtung ist vorteilhaft. Durch die steigenden Anforderungen im Rahmen der Elektromobilität, steigen auch die Anforderungen an Grenzwerte für die EMV (Elektro Magnetische Verträglichkeit) bei niederfrequenten magnetischen Feldern. Gerade bei den hohen Strömen der elektrischen Maschinen eines Traktionsantriebs eines Elektromobils entstehen solche sehr großen magnetischen Felder. Magnetische Lösungen sind anfällig hinsichtlich EMV. Die hierin vorgeschlagene kapazitive Lösung stellt eine Verbesserung der Robustheit gegen magnetische Felder sowie eine einfachere und damit kostengünstigere Lösung bereit.

Aufgrund der unterschiedlichen Ausbildung/Ausgestaltung der mehreren ersten Rotorflügel und der mehreren zweiten Rotorflügel können die mehreren ersten Rotorflügel von den zweiten Rotorflügeln unterschieden werden. Von der Auswerteeinheit kann beispielsweise ermittelt werden, wenn die mehreren ersten Rotorflügel, ausgehend von der Referenzposition, eine vorbestimmte Drehposition erreichen, erreicht haben oder überschreiten. Die vorbestimmte Drehposition kann bei jeder Drehung identisch sein. Gemäß einem Beispiel kann es pro vollständiger Umdrehung eine einzige vorbestimmte Drehposition geben. Von der Auswerteeinheit kann beispielsweise ermittelt werden, wenn sich die mehreren ersten Rotorflügel jeweils um einen vorbestimmten Drehwinkel, z.B. um eine volle Umdrehung von 360°, bis zu der vorbestimmten Drehposition gedreht haben. Auf diese Weise kann beispielsweise jeweils eine volle Umdrehung der mehreren ersten Rotorflügel (d.h. eine Umdrehung um 360°) ermittelt werden. Gemäß einem weiteren Beispiel kann es pro vollständiger Umdrehung mehrere vorbestimmte Drehpositionen geben. Von der Auswerteeinheit kann beispielsweise ermittelt werden, wenn sich die mehreren ersten Rotorflügel jeweils um einen vorbestimmten Drehwinkel, z.B. um ein Drehwinkelsegment von beispielsweise 40°, bis zu der vorbestimmten Drehposition gedreht haben. Auf diese Weise kann beispielsweise jeweils eine Umdrehung der mehreren ersten Rotorflügel um ein bestimmtes Drehwinkelsegment (z.B. eine Umdrehung um 40°) ermittelt werden.

Die Auswerteeinheit kann ausgebildet sein, ein Schaltsignal zu erzeugen, wenn die mehreren ersten Rotorflügel die vorbestimmte Drehposition erreichen, erreicht haben oder überschreiten. Die Auswerteeinheit kann ausgebildet sein, ein Schaltsignal zu erzeugen, wenn sie feststellt, dass die mehreren ersten Rotorflügel die vorbestimmte Drehposition erreichen, erreicht haben oder überschreiten. Bei dem Schaltsignal kann es sich um ein logisches Schaltsignal handeln, welches über eine elektronische digitale Schnittstelle zusammen mit weiteren Sensor- oder Diagnosedaten übertragen werden kann. Bei jeder Erzeugung eines Schaltsignals kann beispielsweise ein Zähler richtungsabhängig z.B. um 1 erhöht oder vermindert werden. Auf diese Weise kann eine Art Indexierung erreicht werden. Mit Hilfe derartiger Indexierungen ist es möglich, auf eine absolute Bestimmung des Lenkwinkels über den Messbereich von typischerweise 1440° mittels Winkelsensoren und Getriebe Untersetzungen zu verzichten. Vielmehr wird mittels der Indexierung eine Art kontaktloser Schalter oder Zähler hinzugefügt, der beispielsweise im Falle des Geradeausfahrens und/oder bei Erreichen der vorbestimmten Drehposition ein Schaltsignal (Indexsignal/Index-Signal) erzeugt. Die Positionserfassungsvorrichtung kann daher auch als eine Art Schalter angesehen und beispielsweise als Schalter bezeichnet werden. Sofern ein Winkelsensor an der Lenkung einen Lenkwinkelteilbereich eindeutig erfasst, kann das richtungsabhängige Schaltsignal dazu verwendet werden, die Lenkwinkelteilbereiche zu zählen und so aus dem Zählerstand multipliziert mit dem Lenkwinkelteilbereich, addiert, um den Winkel innerhalb des Lenkwinkelteilbereichs eine eindeutige Herleitung auf einen Gesamtmessbereich zu erzielen. Hierbei wird für eine wählbare Ausführung zum Beispiel ein Teilbereich durch die Anzahl der Flügel des Rotors von beispielsweise 9 vorgegeben, wodurch der eindeutig zu messende Lenkwinkelteilbereich zu 360° / 9 = 40° entsteht.

Bisherige Ausführungen eines solchen Indexschalters sind magnetisch, bedingen einen zusätzlichen Magneten und einen zusätzlichen integrierten Schaltkreis. Die hierin vorgestellte kapazitive Lösung ist robuster bezüglich der Beeinflussung durch Fremdfelder.

Beispielsweise kann der Zähler jeweils um 1 erhöht oder vermindert werden, wenn die mehreren ersten Rotorflügel ein vorgegebenes Drehwinkelsegment als die vorbestimmte Drehposition erreichen, erreicht haben und/oder richtungsbewertet überschreiten. Auf diese Weise kann das Erreichen oder Überschreiten bestimmter Drehwinkelsegmente, z.B. von 40°, gezählt werden. Aus dem Zählerstand kann dann entsprechend der Drehwinkel abgeleitet werden, ohne den Drehwinkel selbst ermitteln zu müssen. Beträgt der Winkelteilbereich beispielsweise 40°, d.h. wird jeweils bei Erreichen eines Drehwinkelsegments von 40° der Zähler erhöht oder vermindert, so kann bei einem Zählerstand von 4 bei vorgegebener Richtung ein Drehwinkel von 4*40°=160° abgeleitet werden.

Gemäß einem Beispiel kann mit Hilfe der Auswerteeinheit ein Indexschalter realisiert sein, die Auswerteeinheit kann in einem solchen Indexschalter angeordnet sein oder der Drehwinkelsensor kann als solch ein Indexschalter realisiert sein. Der Indexschalter kann beispielsweise bei Geradeauslauf der Lenkung angebracht sein. Es kann angenommen werden, dass sich normalerweisse auf Straßen Rechts- und Linkskurven abwechseln sollten. Ist dann der Geradeauslauf als Indexpunkt gefunden und plausibilisiert, können insbesondere die Überschläge des Motorpositionssensors zur Kommutierung dieses Motors oder das Überstreichen der bestimmten Winkelsegmente, beispielsweise 40° Segmente, eines Drehwinkelsensors gezählt werden.

Bei den aus dem Stand der Technik bekannten Drehmomentsensoren mit magnetischer Jalousie wird, wie oben beschrieben, kein Lenkwinkel bei der magnetischen Jalousie erfasst. Ein Zählen von Winkelsegmenten/Winkelteilabschnitten nach Indexierung ist hiernach nicht möglich. Daher scheinen ein Index-Schalter und ein Zähler eigentlich unnötig zu sein. Jedoch sind auch in diesem Zusammenhang ein Index-Schalter und ein zugehöriger Zähler vorteilhaft, da zur Ansteuerung des Elektromotors der Servolenkung und zur Kommutierung dessen ein weiterer Positionssensor an diesem Motor implementiert ist. Aufgrund der Getriebeübersetzung des Lenkgetriebes von ca. 20..30 repitiert das Sensorsignal zwar recht häufig, kann aber nach Indexierung gezählt werden. Auf diese Weise kann (sozusagen indirekt) auf einen Winkelsensorwert für den Lenkwinkel geschlossen werden.

Um Drehwinkel eindeutig zu ermitteln, die größer sind als eine volle Umdrehung (360°) ist es gemäß einem möglichen Ausführungsbeispiel denkbar, dass zwar mehrere erste Rotorflügel existieren, jedoch nur ein einziger erster Rotorflügel zur Indexierung verwendet wird. Hierfür kann die Auswerteeinheit ausgebildet sein, zu erfassen, wenn ein einer/einziger erster Rotorflügel der mehreren ersten Rotorflügel und damit die Gesamtheit der mehreren ersten Rotorflügel einen vorbestimmten Drehwinkel, z.B. einen Drehwinkel von 360°, erreicht, erreicht hat oder überschreitet. Die Auswerteeinheit kann beispielsweise ausgebildet sein, zu erfassen, wenn der eine/einzige der mehreren ersten Rotorflügel eine Indexposition erreicht, erreicht hat oder überschreitet. Die Auswerteeinheit kann ausgebildet sein, ein Schaltsignal zu erzeugen, wenn sie feststellt, dass der eine der mehreren ersten Rotorflügel den vorbestimmten Drehwinkel, beispielsweise die Indexposition, erreicht, erreicht hat oder überschreitet.

Die mehreren ersten Rotorflügel können eine andere Form aufweisen als die mehreren zweiten Rotorflügel. Zusätzlich oder alternativ können die mehreren ersten Rotorflügel eine andere Fläche oder Oberfläche aufweisen als die mehreren zweiten Rotorflügel.

Gemäß einer beispielhaften Ausgestaltung können die mehreren ersten Rotorflügel als Hohlflügel und die mehreren zweiten Rotorflügel als Vollflügel ausgebildet sein. Gemäß einer beispielhaften Ausgestaltung können die mehreren ersten Rotorflügel als Vollflügel und die mehreren zweiten Rotorflügel als Hohlflügel ausgebildet sein. Unter Hohlflügel kann dabei ein Rotorflügel verstanden werden, der oder in dessen Oberfläche ein Hohlraum oder eine Öffnung ausgebildet ist. Unter Vollflügel kann dabei ein Rotorflügel verstanden werden, der oder dessen Oberfläche vollständig gefüllt ausgebildet ist. Über die Ausgestaltung als Hohlflügel und Vollflügel kann eine unterschiedliche Fläche oder Oberfläche der mehreren ersten Rotorflügel einerseits und der mehreren zweiten Rotorflügel andererseits erreicht werden. Dementsprechend kann die Stärke des mittels der mehreren ersten Rotorflügel erzeugten elektrischen Feldes von der Stärke des mittels der mehreren zweiten Rotorflügel erzeugten elektrischen Feldes voneinander abweichen. Die mehreren ersten Rotorflügel können damit von den mehreren zweiten Rotorflügeln unterschieden werden (beispielsweise aufgrund unterschiedlicher kapazitiver Kopplungen mit dem Stator).

Gemäß einer beispielhaften Ausgestaltung können die mehreren ersten Rotorflügel länger und/oder breiter als die mehreren zweiten Rotorflügel ausgebildet sein. Gemäß einer beispielhaften Ausgestaltung können die mehreren ersten Rotorflügel kürzer und/oder schmaler als die mehreren zweiten Rotorflügel ausgebildet sein. Über die längere, breitere, kürzere und/oder schmalere Ausgestaltung kann eine unterschiedliche Form (und damit eine unterschiedliche Fläche oder Oberfläche) der mehreren ersten Rotorflügel einerseits und der mehreren zweiten Rotorflügel andererseits erreicht werden.

Die mehreren ersten Rotorflügel und die mehreren zweiten Rotorflügel können in einer vorbestimmten Abfolge relativ zueinander angeordnet sein. Die vorbestimmte Abfolge kann derart ausgestaltet sein, dass die Auswerteeinheit eindeutig feststellen kann, wenn einer/ein einziger der mehreren ersten Rotorflügel den vorbestimmten Drehwinkel, z.B. die Indexposition, erreicht, erreicht hat oder überschritten hat.

Gemäß einem möglichen Ausführungsbeispiel kann die Anzahl der mehreren Rotorflügel neun, die Anzahl der mehreren ersten Rotorflügel drei und die Anzahl der mehreren zweiten Rotorflügel sechs sein. Die vorbestimmte Abfolge der mehreren ersten Rotorflügel und der mehreren zweiten Rotorflügel relativ zueinander kann wie folgt sein: zweiter Rotorflügel, erster Rotorflügel, zweiter Rotorflügel, zweiter Rotorflügel, erster Rotorflügel, zweiter Rotorflügel, zweiter Rotorflügel, zweiter Rotorflügel, erster Rotorflügel. In diesem Fall kann die Auswerteeinheit beispielsweise ausgebildet sein, einen der ersten Rotorflügel, z.B. den Rotorflügel Nummer 2, den Rotorflügel Nummer 5 oder den Rotorflügel Nummer 9, eindeutig und/oder die Gesamtheit der ersten Rotorflügel zu detektieren. Es kann ein beliebiger der ersten Rotorflügel zur Indexierung verwendet. Unabhängig davon, welcher der ersten Rotorflügel zur Indexierung verwendet wird, kann stets ermittelt werden, wenn die Gesamtheit der ersten Rotorflügel den vorbestimmten Drehwinkel erreicht, erreicht hat oder überschreitet. Dementsprechend kann die Auswerteeinheit ausgebildet sein, beispielsweise den Rotorflügel Nummer 5, zur Indexierung zu verwenden. Sobald der Rotorflügel Nummer 5 und damit die Gesamtheit der ersten Rotorflügel den vorbestimmten Drehwinkel, z.B. die Indexposition, erreicht, erreicht hat oder überschritten hat, kann die Auswerteeinheit ein Schaltsignal ausgeben. Dieses Schaltsignal kann eine Indexierung, z.B. eine Erhöhung eines Zählers um eins, bewirken. Eine weitere Drehung des Rotorflügels Nummer 5 um den vorbestimmten Drehwinkel, z.B. bis zur Indexposition, beispielsweise um einen Drehwinkel von 360°, kann wiederum eine Indexierung, z.B. eine Erhöhung des Zählers um eins, bewirken. Auf diese Weise können Drehwinkel von mehreren vollständigen Umdrehungen beispielsweise durch Hochzählen eines Zählers erfasst werden. Verschiebungen der beispielhaften Abfolge nach vorne oder nach hinten (nach links oder nach rechts; im Uhrzeigersinn oder gegen den Uhrzeigersinn) sind möglich, wobei sich dann entsprechend zwar nicht der detektierte Rotorflügel aber die Position des detektierten Rotorflügels innerhalb der Abfolge verändert.

Basierend auf der zuvor genannten oder einer anderen Abfolge kann die Auswerteeinheit ausgebildet sein, zu erfassen, wenn der eine/einzige, beispielsweise der Rotorflügel Nummer 5, und damit die Gesamtheit der mehreren ersten Rotorflügel einen vorbestimmten Drehwinkel erreicht, erreicht hat oder überschreitet und ein Schaltsignal zu erzeugen, wenn der eine/einzige der mehreren ersten Rotorflügel und damit die Gesamtheit der mehreren ersten Rotorflügel den vorbestimmten Drehwinkel erreicht, erreicht hat oder überschreitet. Die Auswerteeinheit kann diese Detektion aufgrund der Abfolge der Rotorflügel vornehmen, obwohl die mehreren ersten Rotorflügel identisch ausgebildet sind.

Die mehreren ersten Rotorflügel und die mehreren zweiten Rotorflügel können derart relativ zueinander angeordnet sein, dass das Schaltsignal lediglich einmal pro Drehung um den vorbestimmten Drehwinkel erzeugt wird. Anders ausgedrückt, die mehreren ersten Rotorflügel und die mehreren zweiten Rotorflügel können derart relativ zueinander angeordnet sein, dass das Schaltsignal lediglich dann erzeugt wird, wenn der eine/einzige erste Rotorflügel der mehreren ersten Rotorflügel oder die Gesamtheit der mehreren ersten Rotorflügel die Indexposition erreicht, erreicht hat oder überschreitet. Dies kann aus unterschiedlicher/unterschiedlichen kapazitiven(en) Kopplung(en) der Rotorflügel mit dem Stator abgeleitet werden.

Die mehreren ersten Rotorflügel und die mehreren zweiten Rotorflügel können derart relativ zueinander angeordnet sein, dass es der Auswerteeinheit ermöglicht wird, zu erkennen, dass ein einziger erster Rotorflügel der mehreren ersten Rotorflügel oder die Gesamtheit der mehreren ersten Rotorflügel eine Indexposition erreicht, erreicht hat oder überschreitet. Anders ausgedrückt, die mehreren ersten Rotorflügel und die mehreren zweiten Rotorflügel können derart relativ zueinander angeordnet sein, dass erkannt wird, wenn der eine/einzige erste Rotorflügel der mehreren ersten Rotorflügel oder die Gesamtheit der mehreren ersten Rotorflügel die Indexposition erreicht, erreicht hat oder überschreitet. Dies kann dadurch erreicht werden, indem nur der eine/einzige der mehreren ersten Rotorflügel detektiert wird, nicht jeweils die mehreren ersten Rotorflügel oder alle der mehreren ersten Rotorflügel, oder die Gesamtheit der mehreren ersten Rotorflügel, obwohl die mehreren ersten Rotorflügel identisch ausgebildet sind.

Die mehreren ersten Rotorflügel können zu einem ersten Kondensator verschaltet sein. Die mehreren zweiten Rotorflügel können zu einem zweiten Kondensator verschaltet sein. Aus dieser Verschaltung und den sich anhand der Kondensatoren ergebenden Signale kann die Auswerteeinheit erfassen, wenn die Gesamtheit der mehreren ersten Rotorflügel den vorbestimmten Drehwinkel erreicht, erreicht hat oder überschreitet.

Das drehende Element (das auch als Drehelement bezeichnet werden kann) kann einen Torsionsstab aufweisen oder als Torsionsstab ausgebildet sein. Der mindestens eine Stator und/oder die Auswerteeinheit kann/können auf einer Leiterplatte angeordnet sein. Das drehende Element kann sich durch die Leiterplatte und den mindestens einen Rotor erstrecken.

Gemäß einem zweiten Aspekt wird ein Drehwinkelsensor bereitgestellt. Der Drehwinkelsensor weist die Positionserfassungsvorrichtung auf, wie sie hierin beschrieben wurde/wird. Der Drehwinkelsensor weist ferner eine Drehwinkelermittlungsvorrichtung auf. Die Drehwinkelermittlungsvorrichtung weist den mindestens einen Stator, den mindestens einen Rotor und die Auswerteeinheit auf. Die Auswerteeinheit ist ausgebildet, ausgehend von der Referenzposition, einen Drehwinkel des mindestens einen Rotors relativ zu dem mindestens einen Stator zu ermitteln.

Gemäß dem zweiten Aspekt kann die Positionserfassungsvorrichtung gemäß dem ersten Aspekt mit einer Drehwinkelermittlung kombiniert werden. Beispielsweise kann ein kapazitiv arbeitender Indexschalter mit einer induktiv arbeitenden Drehwinkelermittlungsvorrichtung kombiniert werden.

Die Auswerteeinheit kann ausgebildet sein, den Drehwinkel des mindestens einen Rotors basierend auf einer induktiven Kopplung zwischen dem mindestens einen Rotor und dem mindestens einen Stator zu ermitteln. Die Auswerteeinheit kann beispielsweise als Zwischenergebnis den Drehwinkel des mindestens einen Rotors bis zu einer teilweisen oder vollständigen Umdrehung ermitteln. Ferner kann die Auswerteeinheit ausgebildet sein, den Wert des oben beschriebenen Zählers zu ermitteln. Der Wert des Zählers kann die Anzahl der teilweisen oder vollständigen Umdrehungen des mindestens einen Rotorflügels des Rotors angeben. Aus dem Zwischenergebnis (beispielsweise dem Drehwinkel bis zu 360°) sowie dem Wert des Zählers kann von der Auswerteeinheit die insgesamt erfolgte Drehung des Rotors ermittelt werden. Bei dem teilweisen Drehwinkel kann es sich z.B. um ein Winkelsegment handeln. Gemäß einem Beispiel können jeweils Überschreitungen eines jeweiligen Winkelsegments, d.h. Segmentüberschreitungen, gezählt werden. Bei dem Winkelsegment kann es sich beispielsweise um ein Winkelsegment von 20° oder 40° handeln, d.h. in diesem Fall wird jeweils nach Erreichen oder Überschreiten des Winkelsegments in Abhängigkeit der Richtung des Überschreitens von 20° oder 40° der Zähler erhöht oder vermindert. Insbesondere kann sich das Winkelsignal alle in bestimmten Abständen beispielsweise 20° oder 40° wiederholen und auf diese Weise kann auf beispielsweise einen Lenkwinkel von 1440° gerechnet werden.

In einem Ausführungsbeispiel kann der mindestens eine Rotor als zwei Rotoren ausgebildet sein. Die Auswerteeinheit kann ausgebildet sein, den Drehwinkel eines ersten der beiden Rotoren und den Drehwinkel eines zweiten der beiden Rotoren zu ermitteln. Die Auswerteeinheit kann ausgebildet sein, die gesamte Drehung des ersten der beiden Rotoren aus dem ermittelten Drehwinkel (bis zu einer vollständigen Umdrehung) sowie dem Wert des Zählers zu ermitteln. Die Auswerteeinheit kann ausgebildet sein, die gesamte Drehung des zweiten der beiden Rotoren aus dem ermittelten Drehwinkel (bis zu einer vollständigen Umdrehung) sowie dem Wert des Zählers zu ermitteln. Der erste Rotor kann an einem Ende des drehenden Elements angeordnet sein. Der zweite Rotor kann an einem anderen Ende des drehenden Elements angeordnet sein. Die Auswerteeinheit kann ausgebildet sein, aus dem Drehwinkel oder der gesamten Drehung des ersten Rotors und dem Drehwinkel oder der gesamten Drehung des zweiten Rotors das auf das drehende Element wirkende Drehmoment abzuleiten. Beispielsweise kann die Auswerteeinheit ausgebildet sein, einen Differenzwinkel zwischen dem Drehwinkel oder der gesamten Drehung des ersten Rotors und dem Drehwinkel oder der gesamten Drehung des zweiten Rotors zu ermitteln. Aus dem Differenzwinkel kann die Auswerteeinheit das auf das drehende Element wirkende Drehmoment abgeleitet werden.

Gemäß einem dritten Aspekt der Erfindung wird ein System vorgeschlagen. Das System weist einen Drehwinkelsensor auf, wie er hierin beschrieben wurde/wird. Das System weist ferner ein drehendes Element auf. Der mindestens einen Stator des Drehwinkelsensors ist ortsfest relativ zu dem drehenden Element angeordnet. Der mindestens eine Rotor ist drehfest mit dem drehenden Element verbunden. Die Auswerteeinheit des Drehwinkelsensors ist ausgebildet, aus dem ermittelten Drehwinkel oder der gesamten Drehung des mindestens einen Rotors ein auf das drehende Element einwirkendes Drehmoment zu ermitteln. Das drehende Element kann einen Torsionsstab aufweisen oder als ein Torsionsstab ausgebildet sein.

Die Auswerteeinheit kann ausgebildet sein, aus dem ermittelten Drehwinkel oder der gesamten Drehung des mindestens einen Rotors ein auf das drehende Element wirkendes Drehmoment zu ermitteln. Beispielsweise kann die Auswerteeinheit ausgebildet sein, das auf das drehende Element wirkende Drehmoment aus dem ermittelten Drehwinkel oder der gesamten Drehung des mindestens einen Rotors abzuleiten.

Der beschriebene Drehwinkelsensor und das beschriebene System kann/können ganz oder teilweise mit Hilfe eines Computerprogramms durchgeführt werden. So kann ein Computerprogrammprodukt mit Programmcodeabschnitten für das Ausführen des Verfahrens vorgesehen sein. Das Computerprogramm kann auf einem computerlesbaren Speichermedium oder in dem Drehwinkelsensor und/oder dem System, beispielsweise in der Auswerteeinheit, gespeichert sein. Wenn die Programmcodeabschnitte des Computerprogramms in einen Rechner, Computer oder Prozessor (beispielsweise einen Mikroprozessor, Mikrocontroller oder digitalen Signalprozessor (DSP), digitale festverdrahtete Logik in einem ASIC) geladen sind, oder auf einem Rechner, Computer oder Prozessor laufen, können sie den Computer oder Prozessor dazu veranlassen, einen oder mehrere Schritte oder alle Schritte der hierin beschriebenen Technik auszuführen.

Auch wenn einige der voranstehend beschriebenen Aspekte und Details in Bezug auf den Drehwinkelsensor beschrieben wurden, so können diese Aspekte auch in entsprechender Weise in dem System mit dem Drehwinkelsensor oder einem den Drehwinkelsensor unterstützenden Computerprogramm realisiert werden.

Die vorliegende Erfindung soll weiter anhand von Figuren erläutert werden. Diese Figuren zeigen schematisch:
- Figur 1: eine Explosionsdarstellung eines induktiven Drehmomentsensors aus dem Stand der Technik;
- Figur 2: eine schematische Darstellung einer mehrlagigen Leiterplatte;
- Figur 3a: eine Ansicht eines Rotors gemäß einem Ausführungsbeispiel;
- Figur 3b: eine Autokorrelationsfunktion der Rotorcodierung des Rotors aus Figur 3a;
- Figur 3c: eine Ansicht eines Stators gemäß einem Ausführungsbeispiel; und
- Figur 3d: eine Ansicht eines Rotors gemäß einem Ausführungsbeispiel.

Im Folgenden werden, ohne hierauf beschränkt zu sein, spezifische Details dargelegt, um ein vollständiges Verständnis der vorliegenden Erfindung zu liefern. Es ist einem Fachmann jedoch klar, dass die vorliegende Erfindung in anderen Ausführungsbeispielen verwendet werden kann, die von den nachfolgend dargelegten Details abweichen können.

Es ist dem Fachmann zudem klar, dass die nachfolgend dargelegten Erläuterungen unter Verwendung von Hardwareschaltungen, Softwaremitteln oder einer Kombination davon implementiert sein/werden können. Die Softwaremittel können im Zusammenhang stehen mit programmierten Mikroprozessoren oder einem allgemeinen Rechner, Computer, einer ASIC (Application Specific Integrated Circuit; zu deutsch: anwendungsspezifische integrierte Schaltung) und/oder DSPs (Digital Signal Processors; zu deutsch: digitalen Signalprozessoren). Es ist zudem klar, dass auch dann, wenn die nachfolgenden Details in Bezug auf ein Verfahren beschrieben werden, diese Details auch in einer geeigneten Vorrichtungseinheit, einem Computerprozessor oder einem mit einem Prozessor verbundenen Speicher realisiert sein können, wobei der Speicher mit einem oder mehreren Programmen versehen ist, die das Verfahren durchführen, wenn sie durch den Prozessor ausgeführt werden.

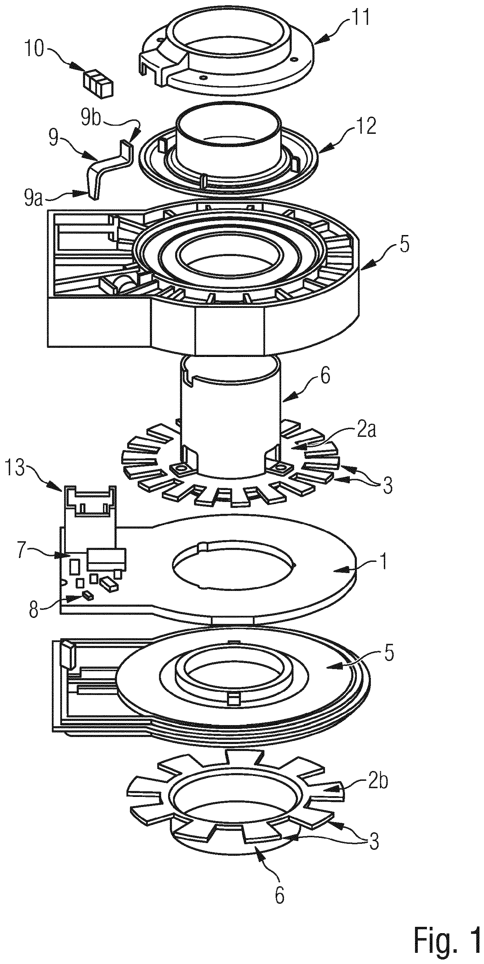

Figur 1 zeigt einen aus dem Stand der Technik bekannten induktiven Drehmomentsensor. Der induktive Drehmomentsensor umfasst eine Leiterplatte 1 und zwei Rotorscheiben 2 (oder kurz zwei Rotoren 2), wobei die Rotorscheiben 2 unterschiedliche Rotorstrukturen 3 mit Strukturgrößen von z.B. 20° beziehungsweise 40° aufweisen. Die Rotorscheiben 2 sind weitestgehend parallel und auf einer gemeinsamen Welle angeordnet, die hier durch einen Torsionsstab gebildet ist. Dieser ist hier Teil einer Lenkwelle. Die Rotorscheiben 2 sind mit kurzem Abstand zu beiden Hauptflächen der Leiterplatte 1 verteilt. Die Leiterplatte 1 und eine erste der Rotorscheiben 2a sind von einem Gehäuse 5 weitgehend dicht umgeben. Eine zweite der Rotorscheiben 2b ist außen mit minimalem Abstand an dem Gehäuse 5 gelagert. Die Rotorscheiben 2, die Leiterplatte 1 und das Gehäuse 5 weisen jeweils eine Öffnung für den Torsionsstab auf. Die Öffnungen sind entsprechend fluchtend.

Jede Rotorscheibe 2 ist mittels einer Trägerstruktur 6 drehfest an dem Torsionsstab befestigt, wobei dieser zwischen den Rotorscheiben 2 ein Torsionselement aufweist. Die einstückige Trägerstruktur 6 umfasst einen rohrstückartigen Teil, dessen Innendurchmesser dem Durchmesser eines zugehörigen Teils des Torsionsstabs zuzüglich einem vorbestimmten geringen Spiel entspricht und an dem die entsprechende Rotorscheibe 2a, 2b befestigt ist. Auf der Trägerstruktur 6 der ersten Rotorscheibe 2a, die in dem Gehäuse 5 angeordnet ist, ist von außen eine Scheibe 12 befestigt, die hier dicht an dem Gehäuse 5 anliegt. Auf diese Weise ist der Drehmomentsensor in sich gegen Verkippungen stabilisiert, wodurch diesbezügliche Messfehler minimiert werden.

Auf der Leiterplatte 1 sind vier Statoren ausgebildet, die in Verbindung mit den beiden Rotoren 2 vier Winkelsensoren bilden. Die Statoren sind zusammen mit erforderlichen Erregerstrukturen in bekannter Weise als Leiterbahnen auf den beiden Hauptflächen der Leiterplatte 1 aufgetragen und kontaktiert. Die Strukturen der Statoren sind mit den Strukturen der Rotorscheiben 2a, 2b abgestimmt.

Auf der Leiterplatte 1 ist weiterhin mindestens ein anwendungsspezifischer integrierter Schaltkreis (ASIC) 7 angeordnet. Jeder Schaltkreis 7 weist mindestens zwei Kanäle auf. Gegebenenfalls ist dem Schaltkreis 7 mindestens eine Auswerteeinheit nachgeschaltet. Der Schaltkreis 7 und gegebenenfalls die mindestens eine Auswerteeinheit bilden die Mittel zum Auswerten.

Zum elektrischen Anschluss an z.B. ein Steuergerät und gegebenenfalls an der Auswerteeinheit ist auf der Leiterplatte eine Steckbuchse 13 mit entsprechenden Kontaktstiften befestigt.

Im Betrieb werden die Rotoren 2 mittels des Torsionsstabs gegenüber den Statoren verdreht. Hierdurch werden entsprechende Signale in die Kanäle des Schaltkreises 7 geleitet und ausgehend von einer festgelegten Nullstellung zu Drehwinkeln berechnet. Abhängig von einem über ein Lenkrad auf die Lenkstange ausgeübten Drehmoment tordiert der Torsionsstab um einen bestimmten Winkel, so dass die beiden Rotoren 2 um entsprechend unterschiedliche Drehwinkel verdreht werden. Aus diesen unterschiedlichen Drehwinkeln wird ein Differenzwinkel berechnet, aus dem das auf die Lenkstange ausgeübte Drehmoment bestimmt wird.

Weiterhin ist mittels eines Hallsensors 8, eines Permanentmagneten 10 und eines Flussleitblechs 9 eine Anzahl von ganzen Umdrehungen des Torsionsstabs bestimmbar: Sobald der Torsionsstab axial gedreht wird und der Permanentmagnet 10 die Referenzposition durchfährt, wird der Magnetfluss durch das Flussleitblech 9 zu dem Hallsensor 8 geleitet, der daraufhin ein Schaltsignal abgibt, das gezählt wird. Je nach Drehrichtung des Torsionsstabs wird für jedes Schaltsignal die Zahl 1 addiert oder subtrahiert; aus der Summe in Verbindung mit dem Signal der Drehwinkel ist eine tatsächliche Lenkwinkelstellung bestimmbar.

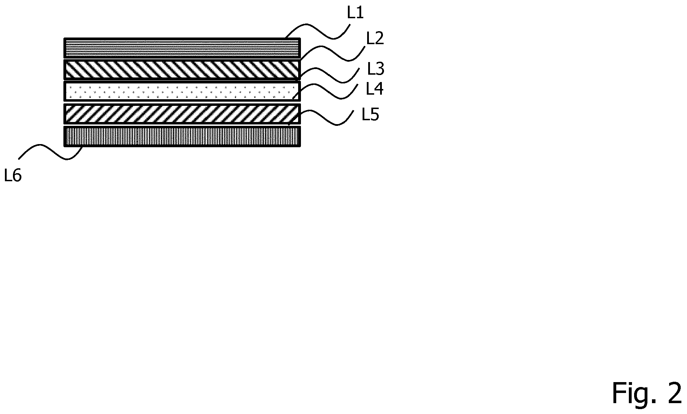

Jedes der Winkelerfassungsmittel weist neben dem Rotor, beispielsweise Rotor 2, auch einen Stator auf. Der Stator ist bei induktiven Sensoren auf dem Fachmann bekannte Weise aufgebaut und weist mindestens eine Erregerspule und mindestens eine Sensorspule auf. Der jeweilige Stator ist bei dem vorliegenden Ausführungsbeispiel auf einer einzigen mehrlagigen Leiterplatte 8 angeordnet, die in Fig. 2 exemplarisch dargestellt ist. Die mehrlagige Leiterplatte 8 weist insgesamt sechs Lagen auf, die in der Fig. 2 mit L1, L2, L3, L4, L5 und L6 bezeichnet sind. Die einzelnen Lagen L1 bis L6 sind auf Leiterplattenmaterial aufgebracht, das in der Fig. 2 zwecks einer besseren Übersichtlichkeit mittels voneinander abweichender Texturen symbolisiert ist. Der Stator des in der Fig. 1 teilweise dargestellten Winkelerfassungsmittels ist auf den Lagen L1 und L2 der Leiterplatte 8 angeordnet und der Stator des in Fig. 1 nicht dargestellten Winkelerfassungsmittels ist auf den Lagen L5 und L6 der Leiterplatte 8 angeordnet. Auf den Lagen L3 und L4 der Leiterplatte 8 ist zum einen das als induktiver Sensor ausgebildete Indexierungsmittel angeordnet. Zum anderen sind die Lagen L3 und L4 der Leiterplatte 8 zusätzlich als Abschirmung ausgebildet, mittels der eine ungewünschte Wechselwirkung zwischen den als induktive Sensoren ausgebildeten Winkelerfassungsmitteln zumindest reduziert ist, dessen Statoren auf den Lagen L1 und L2 sowie auf den Lagen L5 und L6 der Leiterplatte 8 angeordnet sind. In Fig. 2 sind lediglich die Lagen L1 bis L6 dargestellt, nicht aber die Statoren und das als induktiver Sensor ausgebildete Indexierungsmittel.

Heutige Drehmomentsensoren beruhen grundsätzlich auf den in Bezug auf Figuren 1 und 2 beschriebenen Prinzipien oder auf den ebenfalls oben skizzierten Prinzipen mit magnetischer Jalousie. Bestandteil einer modernen Servolenkung ist ein so genannter Torsionsstab, der sich bei dem Einbringen eines Drehmoments verdrillt. Die beiden Enden des Torsionsstabs werden oftmals als "Input-Shaft" und "Output-Shaft" (oder hierin auch als Eingangsseite und Ausgangsseite) bezeichnet. Bei heutigen Technologien, die teilweise auch als CIPOS-Strukturen bezeichnet werden, sind in einer mehrlagigen Leiterkarte (PCB = Printed Circuit Board), wie sie beispielsweise in Bezug auf Figur 2 beschrieben wurde, mehrere Messkanäle untergebracht. Insbesondere realisieren die Lagen L1, L2 Messkanäle, die den Winkel des "Input-Shafts" messen, die Lagen L3, L4 sind Abschirmlagen und die Lagen L5, L6 beinhalten Messkanäle zum Messen des Winkels am "Output-Shaft". Die Differenz der Winkel am "Input-Shaft" und "Output-Shaft" gibt die Verdrillung des Torsionsstabs wieder und ist proportional dem Drehmoment, welches der Fahrer zum Lenken auf das Lenkrad ausübt.

Insbesondere sind CIPOS Sensoren so gestaltet, dass auf der "Input-Shaft" Seite (Eingangsseite) ein achtzehn-flügeliger CIPOS Sensor (IS) mit achtzehn-flügeligem Rotor (IS-R) mit einem Eindeutigkeitsbereich von 360°/18=20° ausgebildet ist und auf der "Output- Shaft" Seite (Ausgangsseite) ein neun-flügeliger Rotor (OS-R) mit einem absoluten Messbereich von 40° ausgebildet ist. Die Rotoren mit den neun (bzw. achtzehn) Flügeln sind unter anderem durch metallische Stanz-Biegeteile ausgestaltet oder es sind Kunststoffteile, die elektrisch leitende Flächen beinhalten oder es sind umspritzte Stanzteile.

Die in Bezug auf Figuren 1 und 2 beschriebenen Details beschreiben einen induktiv arbeitenden Drehwinkelsensor. Bei einem solchen Drehwinkelsensor ist es aufwändig, einen bestimmten Drehwinkel zu unterscheiden von einem um eine volle Umdrehung verdrehten Drehwinkel. Daher wurde daran gedacht, eine Indexierung zu verwenden, sobald eine volle Umdrehung erreicht wurde.

Hierfür wurde daran gedacht, die Flächen der Rotoren durch Freistellung zu modifizieren, um diese unterscheidbar zu machen. Durch die durch Freistellung modifizierten Flächen der Rotoren werden vollflächige Rotorflügel und Hohlflügel unterscheidbar. So kann beispielsweise ein modifizierter Flügel von den anderen Flügeln unterschieden werden und es kann eine Indexierung erfolgen, sobald der modifizierte Flügel sich um eine volle Umdrehung bewegt hat. Das heißt, der Rotor eines Winkelerfassungsmittels zur Erfassung einer Winkelstellung des sich drehenden Teils relativ zu einer Referenzposition dient zusätzlich der Indexierung bei einer vorher festgelegten Drehung, bevorzugt einer 360°-Drehung, des drehenden Teils relativ zu der Referenzposition mittels des Indexierungsmittels.

Der in Bezug auf Figuren 1 und 2 beschriebene induktive Sensor (CIPOS) nutzt vor allem die Außenkontur eines Flügels und nicht die Fläche selbst. Für die induktive Erfassung der Position (CIPOS) sind volle Flächen im Prinzip immer tendenziell negativ, da Wirbelströme sich frei ausgestalten können. Die Ausführung mit Hohl- und Vollflügeln stellen daher eine, wenn auch geringe, induktive Asymmetrie dar, die nachteilig für die Messung ist. Neue Realisierungen sind daher wünschenswert.

Es wurde bislang daran gedacht, die Fläche eines einzigen der Rotorflügel durch Freistellung zu modifizieren, um diesen von den anderen Rotorflügeln unterscheidbar zu machen. Durch die durch Freistellung modifizierte Fläche werden die vollflächige Rotorflügel und der eine Hohlflügel unterscheidbar. Das heißt, es wurde daran gedacht, einen einzigen markierten Flügel vorzusehen. Erreicht dieser einzige markierte Flügel eine volle Drehung, so schaltet die Indexierung.

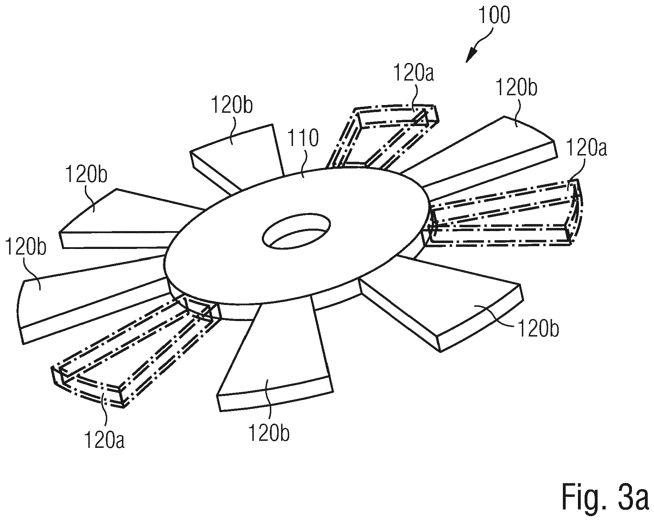

Figur 3a zeigt einen Rotor einer kapazitiv wirkenden Positionserfassungsvorrichtung und/oder eines Drehwinkelsensors mit einer solchen kapazitiv wirkenden Positionserfassungsvorrichtung. Der grundsätzliche Aufbau des Drehwinkelsensors kann dem grundsätzlichen Aufbau des induktiven Sensors aus Figur 1 entsprechen. Alternative Ausgestaltungen sind jedoch ebenfalls möglich, beispielsweise Drehmomentsensoren mit magnetischer Jalousie. Im Folgenden wird unter Bezugnahme auf die Figuren 3a bis 3d ein Aufbau des Rotors einer kapazitiv wirkenden Positionserfassungsvorrichtung und/oder eines Drehwinkelsensors mit einer solchen Positionserfassungsvorrichtung beschrieben.

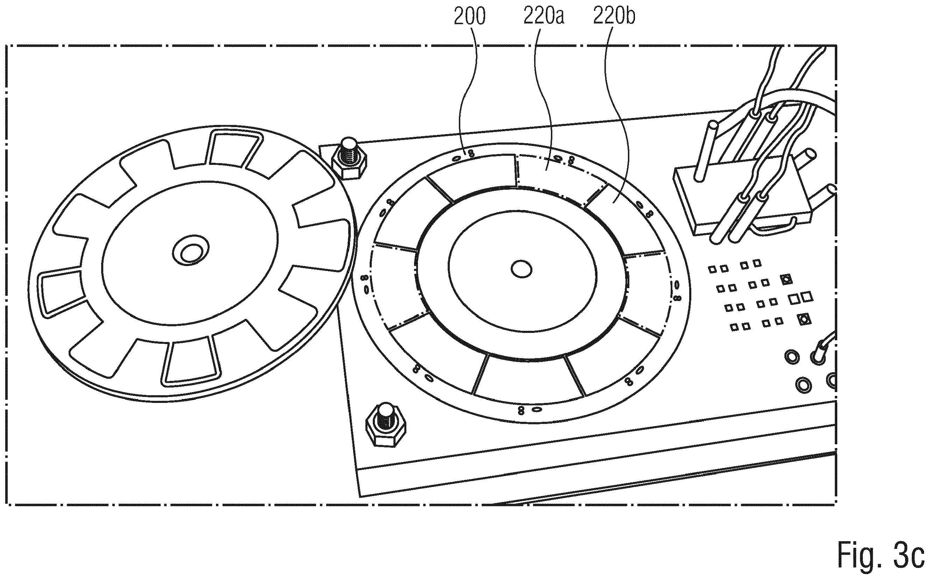

Die kapazitiv wirkende Positionserfassungsvorrichtung weist mindestens einen Stator (siehe beispielhaft Stator 200 in Figur 3c), mindestens einen Rotor 100 und eine Auswerteeinheit auf. Der mindestens eine Stator 200 ist ortsfest relativ zu einem drehenden Element anordenbar. Das heißt, bei einer Drehung des drehenden Elements dreht sich der Stator nicht mit, wenn er mit dem drehenden Element verbunden ist. Der mindestens eine Rotor 100 ist drehfest mit dem drehenden Element verbindbar. Das heißt, bei einer Drehung des drehenden Elements dreht sich der Rotor 100 mit, wenn er mit dem drehenden Element drehfest verbunden ist. Der mindestens eine Rotor 100 weist einen Grundkörper 110 und beispielhaft mehrere sich von dem Grundkörper 110 radial nach außen erstreckende Rotorflügel 120a, 120b auf. Als die mehreren Rotorflügel 120a, 120b sind mehrere erste Rotorflügel 120a und mehrere zweite Rotorflügel 120b vorgesehen. Die mehreren ersten Rotorflügel 120a und die mehreren zweiten Rotorflügel 120b sind unterschiedlich voneinander ausgebildet. Anders ausgedrückt, die mehreren ersten Rotorflügel 120a der mehreren Rotorflügel 120a, 120b sind von den mehreren zweiten Rotorflügeln 120b der mehreren Rotorflügel 120a, 120b verschieden ausgebildet. Die Auswerteeinheit ist ausgebildet, zu erfassen, wenn die mehreren ersten Rotorflügel 120a einen vorbestimmten Drehwinkel erreichen, erreicht haben oder überschreiten.

Der Rotor 100 der Figur 3a kann beispielhaft einen nicht gezeigten Rotorträger aufweisen. Der Rotorträger kann ausgebildet sein, den Grundkörper 110 und damit die Rotorflügel 120a, 120b zu tragen. Zum Beispiel können der Rotorträger und die Rotorflügel 120a, 120b fest miteinander verbunden sein. Der Rotorträger kann ein Metall aufweisen oder aus einem Metall gefertigt sein. Zusätzlich oder alternativ kann der Rotorträger einen Kunststoff aufweisen oder aus einem Kunststoff gefertigt sein. Auf den Rotorträger kann jedoch auch verzichtet werden. Der Grundkörper 110 kann ein Metall aufweisen oder aus einem Metall gefertigt sein. Zusätzlich oder alternativ kann der Grundkörper 110 einen Kunststoff aufweisen oder aus einem Kunststoff gefertigt sein. In dem Beispiel aus Figur 3a besteht der Grundkörper 110 beispielhaft aus einem Metall. Die Rotorflügel 120a, 120b können ein Metall aufweisen oder aus einem Metall gefertigt sein. Zusätzlich oder alternativ können die Rotorflügel 120a, 120b einen Kunststoff aufweisen oder aus einem Kunststoff gefertigt sein. In dem Beispiel aus Figuren 3a bestehen die Rotorflügel 120a, 120b beispielhaft aus einem Metall.

Grundsätzlich kann gesagt werden: Ein kapazitiver Sensor nutzt die Fläche eines Rotorflügels. Die Fläche ist sozusagen die oder Teil der Kondensatorfläche. Der induktive Sensor (CIPOS) nutzt vor allem die Außenkontur eines Flügels und nicht die Fläche selbst. Als drehendes Element wird im Folgenden ein Torsionsstab angenommen.

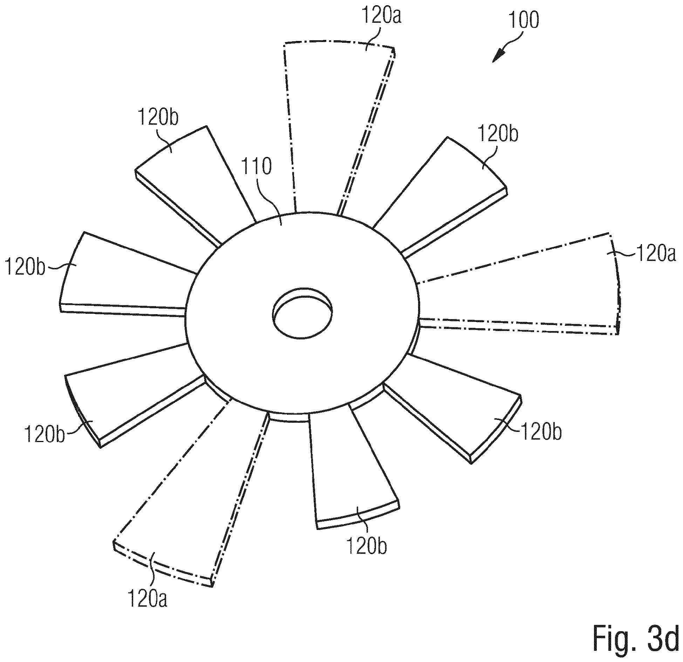

In dem Beispiel aus Figur 3a weist der Rotor 100 neun Rotorflügel 120a, 120b auf. Eine andere Anzahl von Rotorflügeln 120a, 120b ist denkbar und möglich, beispielsweise achtzehn Rotorflügel 120a, 120b für den Input-Shaft (für die Eingangsseite). Von den neun Rotorflügeln 120a, 120b sind beispielhaft drei als erste Rotorflügel 120a ausgebildet. Von den neun Rotorflügeln 120a, 120b sind beispielhaft sechs als zweite Rotorflügel 120b ausgebildet. In dem Beispiel aus Figur 3a sind die ersten Rotorflügel 120a untereinander jeweils identisch. In dem Beispiel aus Figur 3a sind die zweiten Rotorflügel 120b untereinander jeweils identisch. Die ersten Rotorflügel 120a unterscheiden sich von den zweiten Rotorflügeln 120b. In dem Beispiel aus Figur 3a weisen die ersten Rotorflügel 120a zumindest teilweise oder abschnittsweise eine Ausnehmung oder Öffnung auf. Die Ausnehmung oder Öffnung kann jeweils den ersten Rotorflügel 120a komplett durchdringen, kann jeweils aber auch lediglich nur an einer Seite, beispielsweise einer Unterseite, der ersten Rotorflügel 120a angeordnet sein. Aufgrund der Ausnehmungen oder Öffnungen in den ersten Rotorflügeln 120a werden die ersten Rotorflügel 120a auch als teilweise hohl oder kurz als Hohlflügel 120a bezeichnet. Ferner sind in dem Beispiel aus Figur 3a die zweiten Rotorflügel 120b vollständig gefüllt ausgebildet und können daher auch als Vollflügel 120b bezeichnet werden. Alternativ können die ersten Rotorflügel 120a als Vollflügel und die zweiten Rotorflügel 120b als Hohlflügel ausgebildet sein. Zusätzlich oder alternativ zu den zuvor genannten Ausbildungsmöglichkeiten ist es denkbar, dass sich die Fläche der ersten Rotorflügel 120a von der Fläche der zweiten Rotorflügel 120b unterscheidet. Die ersten Rotorflügel 120a können beispielsweise größer (siehe das Ausführungsbeispiel aus Figur 3d) oder breiter als die zweiten Rotorflügel 120b ausgebildet sein. Alternativ können die ersten Rotorflügel 120a kürzer oder schmaler als die zweiten Rotorflügel 120b ausgebildet sein.

Die unterschiedliche Ausgestaltung der ersten Rotorflügel 120a (zum Beispiel gemäß Figur 3a oder gemäß Figur 3d) im Vergleich zu den zweiten Rotorflügeln 120b führt zu einer Art Markierung der ersten Rotorflügel 120a bezüglich der zweiten Rotorflügel 120b, d.h. die ersten Rotorflügel 120a können von den zweiten Rotorflügeln 120b unterschieden werden. Anders ausgedrückt, die ersten Rotorflügel 120a können anhand ihrer andersartigen Ausgestaltung von den zweiten Rotorflügeln 120b unterschieden werden. Sind die ersten Rotorflügel 120a jeweils identisch, können sie untereinander jedoch nicht anhand ihrer Ausgestaltung unterschieden werden. Dies hätte zur Folge, dass nicht nur dann, wenn ein bestimmter der ersten Rotorflügel 120a eine Indexposition erreicht, eine Indexierung erfolgt, z.B. ein Zähler erhöht wird, sondern auch dann, wenn ein anderer der identischen ersten Rotorflügel 120a den Ort der Detektion passiert. In Folge würde der Zähler falsch und, genauer gesagt, viel zu häufig, hochgezählt.

Daher werden die Rotorflügel 120a, 120b in einer Art und Weise kodiert, dass eine genauere Unterscheidbarkeit ermöglicht wird. Genauer gesagt erfolgt eine derartige Codierung, dass ein erster Rotorflügel 120a / ein einziger erster Rotorflügel 120a oder die Gesamtheit der ersten Rotorflügel 120a oder ein Erreichen der Indexposition durch den einen/einzigen ersten Rotorflügel 120a oder der Gesamtheit der mehreren ersten Rotorflügel eindeutig detektierbar ist. Beispielsweise kann jeweils eine vollständige Umdrehung von 360° des einen/einzigen ersten Rotorflügels 120a der mehreren ersten Rotorflügel 120a erkannt werden und nach jeder vollständigen Umdrehung kann geschaltet werden, d.h. der Indexzähler kann erhöht werden.

Hierfür ist eine spezielle, nicht beliebige Codierung der Rotorflügel 120a, 120b des kapazitiv abgetasteten Positionssensors vorgesehen, welcher an einer bestimmten Position (Indexposition) über den Umfang von 360° ein Schaltsignal generieren soll. Dieses Schaltsignal wird auch als Indexsignal bezeichnet. Sind solche Indexsignalschalter so ausgeführt, dass ein einzelner Rotorflügel eine Markierung aufweist, ist die Realisierung der Indexierung leicht nachvollziehbar. Ist die Markierung durch die Ausbildung als Hohlflügel (siehe Figur 3a) oder als ein verlängerter Flügel (siehe Figur 3d) ausgebildet, wird die von diesem markierten Flügel ausgehende kapazitive Kopplung mit der kapazitiven Kopplung eines als Vollflügel (siehe Figur 3a) oder verkürzt ausgebildeten Rotorflügels (siehe Figur 3d) verglichen. Aus der unterschiedlichen kapazitiven Kopplung kann der markierte Rotorflügel erkannt/detektiert werden.

Die Verwendung nur eines einzelnen markierten Flügels ist nicht optimal. Denn es trägt nur ein einziger Flügel zur Auswertung bei. Daher wird hierin eine Codierung als Muster oder Abfolge von markierten und nicht markierten Flügeln vorgeschlagen. Wichtig ist hierbei, dass das Indexsignal nur einmal pro Umdrehung über 360° an einer vorbestimmten Stelle (Indexpunkt oder Indexposition) erzeugt wird. Hierfür muss die Codierung stark irregulär sein, also möglichst keine symmetrischen Strukturen oder geometrische Wiederholungen zeigen. Was unter einer irregulären Codierung zu verstehen ist, wird nun zunächst erläutert bevor eine konkrete Realisierung der Codierung beschrieben wird.

Die hierin vorgeschlagene Codierung beruht auf Codierungen, die zu der Klasse der sogenannten Pseudo Random Noise (PRN) Folgen gehören. Wichtige technische Anwendung dieser Codierungen sind in der Nachrichtentechnik bei der Modulation von Signalen und bei der Satelliten-gestützten Navigation, wie GPS, zu finden. In den mathematischen Beschreibungen und für die nachrichtentechnischen Verwendungen werden häufig ternäre Codierungen verwendet. Ternär bedeutet in diesem Zusammenhang, dass der Code pro Stelle (Bit) jeweils drei Zustände kennt, die mit +1, -1, 0 angegeben sind.

Für die vorliegende Anwendung von Codierungen bei einem Positionssensor werden die Codes jedoch auf binäre Codes reduziert. Jede Stelle (bit) des Codes kann jeweils die Zustände 0 oder 1 annehmen. Beispielhaft wird angenommen, dass 0 einem nicht markierten Flügel entspricht und 1 einem markierten Flügel entspricht. Dies Zuordnung kann auch umgekehrt werden. Alle Codierungen haben eine Länge n, was im hier beschriebenen Fall der Anzahl der Flügel des Positionssensors entspricht. Nach der Länge n wiederholt sich der Code.

Die Eigenschaften und Wirksamkeit der verwendeten Codierung kann betrachtet werden, indem man den Code mit sich selbst mathematisch faltet. Dieser Vorgang ist auch unter dem Verfahren der Auto-Korrelations-Funktion (AKF) bekannt. Bildlich gesprochen schreibt man den Code zweimal untereinander und multipliziert bit für bit miteinander und bildet anschließend die Summe. Hiernach verschiebt man den Code um eine Stelle nach rechts. Die links entstehend leere Stelle wird rollierend mit dem rechts heraus geschobenen Bit ergänzt. Erneut wird die bit-weise Multiplikation und Summation aller bits durchgeführt. Der Code wird seiner Länge n entsprechend verschoben. Anders ausgedrückt, stellt man sich eine zunächst zufällig aussehende Folge von 0,1 oder -1, +1 als Sequenz vor. Man schreibt zwei gleiche Codes untereinander und bildet das Ergebnis, indem in jeder Spalte die beiden Codewerte miteinander multipliziert werden und über das Ergebnis in der Folge die Summe als Zahl gebildet wird. Nun verschiebt man z. B. den unteren Code um eine Stelle und wiederholt den Vorgang.

Gute Codierungen zeigen einen möglichst großen Wert nur an einer Stelle (ohne Verschiebung der bits) und einen möglichst kleinen Wert bei jeder der durchgeführten Verschiebungen. Eine weitere besondere Eigenschaft, die auch hier genutzt werden kann, zeigen die Codierungen von dem Mathematiker Barker und die nach ihm benannten Baker-Codes auf. Für sie gilt, dass bei allen Verschiebungen immer das gleiche Ergebnis herauskommt und nur für den nicht verschobenen Code eine "Überhöhung" stattfindet. Allerdings sind die Längen der Barker-Codes beschränkt. Außer den trivialen Codes <7, sind nur Barker-Codes der Längen 7, 11, 13 bekannt. Im Detail steigt der 7er Barker-Code am Indexpunkt von 2 auf 4, was einer eine Verdoppelung der Signalamplitude entspricht. Der 11er Barker- Code steigt von 2 auf 5, also eine Verstärkung um 2,5. Die Barker-Codes der Längen 7 und 11 lauten wie folgt:
Barker-Code der Länge 7:
   1 1 1 0 0 1 0
Barker-Code der Länge 11:
   1 1 1 0 0 0 1 0 0 1 0

Bei Barker Codes ist es so, dass sie nur dann einen hohen Wert liefern, wenn die beiden Codes genau übereinander stehen. Bei allen verschobenen Codes ist der Wert vergleichsweise klein, wobei es beim Barker Code die Besonderheit hat, dass dieser kleine Wert auch zudem immer für jede Verschiebung gleich groß ist. Diese Barker-Codes Barker-7 Bit oder Barker-13 liefern daher gute Ergebnisse.

Allerdings hat der Rotor 100 neun Flügel und nicht sieben oder dreizehn, so dass diese Codes nicht geeignet sind für die vorliegende Problematik und daher nur zum Verständnis dienen.

Die Codierung kann für die erläuterten Lenkwinkel-, Lenkmoment-Sensoren Verwendung finden (auch bezeichnet als TAS: Torque & Angle Sensor). Hinsichtlich der Funktionsweise der TAS-Sensoren wird an dieser Stelle auf die obigen Ausführungen verwiesen.

Wie zuvor beschrieben, ist einer der Rotoren dieser Sensoren heutzutage mit neun Flügeln ausgeführt. Der aus neun Flügeln resultierende eindeutige Messbereich von 40° und die Hälfte hiervon mit 20° (bei Rotoren mit 18 Flügeln) sind typisch für die Messbereiche der Torsion der im Sensor genutzten Torsionsstäbe und ihrer Torsionssteifigkeiten. Insofern ist eine Codierung mit 9 bits entsprechend für neun Flügel nötig. Eine solche Codierung mit nachfolgend noch genauer beschriebenen vorteilhaften Eigenschaften wird nachfolgend als EX9 bezeichnet und lautet
Codierung EX9:
0 1 0 0 1 0 0 0 1

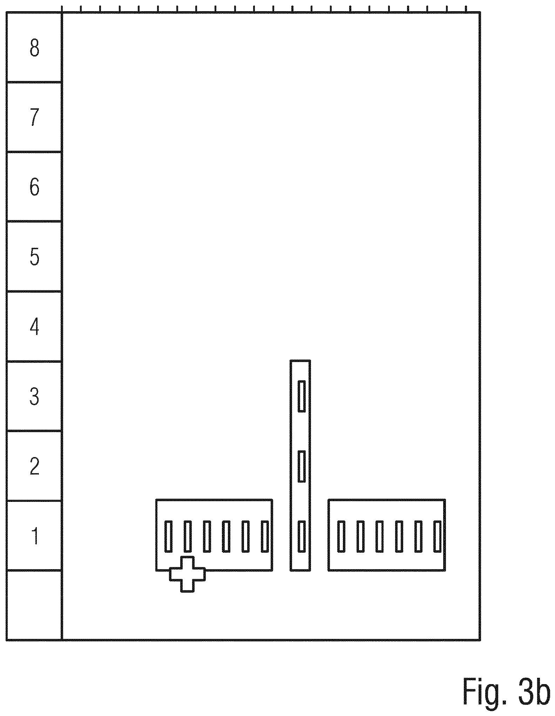

Die Codierung EX9 zeigt bezüglich der AKF ein sehr günstiges und vorteilhaftes Verhalten, welches dem eines Barker-Codes zumindest sehr nahekommt. Hierbei entsteht bei der AKF ein typischer grafischer Verlauf wie er in Figur 3b schematisch dargestellt ist, wobei nur die Verschiebungen um ganze Stellen betrachtet wurden. Die günstige, vorteilhafte Eigenschaft dieser Codierung ist es, dass sie über weite Bereiche außerhalb des Indexpunktes ein Ergebnis von 1 besitzt. In der Nähe des Indexpunktes wird das Ergebnis zunächst 0 um dann in der Korrelationsüberhöhung auf einen Wert von 3 anzusteigen. Die von 0 zu 3 entstehende Schaltflanke ist daher besonders steil, was zu einer verbesserten Schaltgenauigkeit beitragen kann. Anders ausgedrückt, der Peak bei dem Wert von 3 bedingt zusammen mit dem Wert von 0 direkt um den Indexpunkt, dass die Codierung eine sehr gute Detektierbarkeit des einen/einzigen ersten Rotorflügels der mehreren ersten Rotorflügel 120a an der Indexposition ermöglicht.

Die Codierung verdreifacht die Amplitude. Daher kann mit der Codierung EX9 für die kapazitive Auswertung einer Anordnung von markierten 120a und nicht markierten Rotorflügeln 120b eines Positionssensors mit Schaltfunktion eine wirksame Signalverstärkung erzielt werden. Gegenüber einer Ausgestaltung mit lediglich einem einzigen markierten Flügel trägt nicht nur ein einziger sondern es tragen mehrere Flügel zu einer Auswertung bei. Hierdurch wird die Signalamplitude deutlich erhöht, was die Funktion eines solchen Sensors robuster und präziser gestaltet.

Genaueres wird deutlich aus der Zusammenschau mit dem Stator 200 aus Figur 3c. Auch auf dem Stator 200 ist der verwendete Code 100101000 realisiert, der auch anders herum gelesen werden kann (000101001 oder 010010001), je nachdem welche Seite des Rotors 300 zu der gezeigten Oberseite des Stators 200 zeigt. Anders ausgedrückt, der Stator 200 weist verschiedene Segmente auf, die den genannten Code beschreiben oder implementieren. In der Figur 3c gibt es auf dem Stator 200, beginnend bei der 9:00Uhr-Position, drei Segmente 220a entsprechend der 1 und sechs Segmente 220b entsprechend der 0. Ebenso gibt es an dem Rotor 100 drei erste Rotorflügel 120a (im Folgenden teilweise als Hohlflügel 120a bezeichnet) entsprechend der 1 und sechs zweite Rotorflügel 120b (im Folgenden teilweise als Vollflügel 120b bezeichnet) entsprechend der 0. Wird angenommen, dass die Figur 3c eine Oberseite des Stators 200 zeigt, so können die Figuren 3a und 3d jeweils eine Unterseite oder eine Sicht auf die Unterseite des Rotors 300 zeigen. Wichtig ist in diesem Zusammenhang, dass der Rotor 300 und der Stator 200 derart aufeinander abgestimmt sind, dass es eine Position gibt, in der die ersten Rotorflügel 120a (die Gesamtheit der ersten Rotorflügel 120a) vollständig die Segmente 220a (die Gesamtheit der Segmente 220a) überlappen.

Auf dem Stator 200 befinden sich die neun Segmente des Empfängers, die die Codierung des Rotors 100 aufnehmen. Die drei Segmente 220a werden beispielsweise zu einer ersten Kapazität oder einem ersten Kondensator zusammengeschaltet. Zum Beispiel werden die drei Segmente 220a zueinander parallel geschaltet, bilden eine Kapazitäts-Bank und addieren sich somit. Die sechs Segmente 220b werden beispielsweise zu einer zweiten Kapazität oder einem zweiten Kondensator zusammengeschaltet. Zum Beispiel werden die drei Segmente 220b zueinander parallel geschaltet, bilden eine Kapazitäts-Bank und addieren sich somit. Die beiden so gebildeten Kapazitäts-Bänke, werden z. B. in Reihe zu einem Differentialkondensator geschaltet. Beispielsweise werden die jeweiligen Kapazitäten oder Kondensatoren aus dem Zusammenwirken des jeweiligen Rotors 100, insbesondere der Rotorflügel des Rotors 100, und des Stators 200, insbesonderes der Segmente des Stators 200, gebildet.

Der Code "matched" im Indexschaltpunkt, wenn die drei Hohlflügel 120a genau über den drei Detektor-Segmenten 220a stehen. Dann ist dort wegen der drei Hohlflügel 120a die 3-mal so kleine Kapazität und bei den sechs Vollflügeln 220b über der zweiten Kondensator-Bank die größte über die Drehung auftretende Kapazität. Dreht sich der Rotor 100 gegenüber dem Stator, so verändert sich die Überlappung der Rotorflügel 120a, 120b gegenüber den Segmenten 220a, 220b. Genauer gesagt verringert sich die Überlappung. Folglich verringert sich die Kapazität.

Die Codierung ist so, dass das Schaltsignal weiterhin nur einmal an dem Indexpunkt über die 360° auftritt. Da aber alle neun Flügel nun beitragen und nicht nur ein Einzelner, ist die Signalamplitude um den Faktor 3 verstärkt. Das ist insbesondere bei den verwendeten schwachen Signalen und kleinen Kapazitäten viel besser auszuwerten.

Genauer gesagt, mittels eines mit der Codierung EX9 kodierten Rotors 100 kann die Auswerteeinheit stets eindeutig erkennen, dass der eine/einzige erste Rotorflügel der mehreren ersten Rotorflügel 120a oder die Gesamtheit der ersten Rotorflügel 120a der mehreren ersten Rotorflügel 120a die Indexposition erreicht (hat). In diesem Fall kann die Auswerteeinheit ausgebildet sein, zu erfassen, wenn der eine/einzige erste Rotorflügel der mehreren ersten Rotorflügel 120a oder die Gesamtheit der ersten Rotorflügel 120a der mehreren ersten Rotorflügel 120a die Indexposition erreicht oder überschreitet. Wenn der eine/einzige erste Rotorflügel der mehreren ersten Rotorflügel 120a oder die Gesamtheit der ersten Rotorflügel 120a der mehreren ersten Rotorflügel 120a die Indexposition erreicht oder überschreitet, kann die Auswerteeinheit ein Schaltsignal ausgeben. Beispielsweise kann durch das Schaltsignal ein Zähler erhöht werden. Dadurch können nicht nur Drehwinkel bis 360°, sondern durch Zählen vollständiger Umdrehungen jegliche Drehwinkel eindeutig bestimmt werden. Auf diese Weise kann beispielsweise das in Bezug auf Figur 2 beschriebene Indexierungsmittel (das auch als Indexierungskomponente oder Indexierungsvorrichtung bezeichnet werden kann) als kapazitiver Sensor realisiert werden. Beispielsweise kann auf den Lagen L3 und L4 der Leiterplatte aus Figur 2 die als kapazitiver Sensor ausgebildete Indexierungskomponente oder Indexierungsvorrichtung angeordnet sein.

Generell kann die Auswerteeinheit ausgebildet sein, einen Drehwinkel des Rotors oder der ersten Rotorflügel 120a zu ermitteln. Der mindestens eine Rotor kann als zwei Rotoren ausgebildet sein. Ein erster der beiden Rotoren kann an dem Input-Shaft (der Eingangsseite) und ein zweiter der zwei Rotoren kann an dem Output-Shaft (der Ausgangsseite) angeordnet sein. Die Auswerteeinheit kann den Drehwinkel an beiden Rotoren ermitteln und die Differenz aus beiden Drehwinkeln bilden, um einen Differenzwinkel zu ermitteln. Aus dem Differenzwinkel kann die Auswerteeinheit ein auf den Torsionsstab wirkendes Drehmoment zu ermitteln.

In Figur 3d ist ein weiteres Beispiel zu erkennen, wie die ersten Rotorflügel 120a von den zweiten Rotorflügeln 120b unterscheidbar ausgestaltet sein können. In diesem Beispiel sind die ersten Rotorflügel 120a größer ausgebildet als die zweiten Rotorflügel 120b. Andere Ausgestaltungen als die in Figuren 3a und 3d sind denkbar.

Der Rotor aus den Figuren 3a und 3d weist eine gewisse Asymmetrie auf. Der Rotor kann alternativ jedoch auch symmetrisch aufgebaut sein. Auf diese Weise kann er auch für induktive arbeitende Lösungen bestmöglich verwendet werden. Das heißt, auch ein Einsatz mit seinen metallisch leitend ausgestalteten Flügeln als induktiver Positionssensor (CIPOS) ist möglich.

Die Auswerteeinheit kann ausgebildet sein, zu erfassen, wenn die drei ersten Rotorflügel 120a eine vorbestimmte Drehposition erreichen, erreicht haben oder überschreiten. Bei Erreichen oder Überschreiten der vorbestimmten Drehposition kann die Auswerteeinheit einen Zähler (z.B. um den Wert 1) erhöhen. Beispielsweise kann die Auswerteeinheit jedes Mal dann, wenn die mehreren ersten Rotorflügel 120a die vorbestimmte Drehposition erreichen, erreicht haben oder überschreiten, ein Schaltsignal erzeugen. Dies kann insbesondere einmal pro vollständigem Umlauf der Fall sein. Das Schaltsignal kann anzeigen, den Schalter zu erhöhen. Die vorbestimmte Drehposition kann beispielsweise einem Drehwinkelsegment entsprechen. Das Drehwinkelsegment kann beispielsweise einen Winkel von 20° oder 40° abdecken. Dadurch können vorbestimmte Drehwinkel, wie teilweise oder vollständige Umdrehungen, gezählt/indexiert werden. Auf diese Weise kann beispielsweise das in Bezug auf Figur 2 beschriebene Indexierungsmittel (das auch als Indexierungskomponente oder Indexierungsvorrichtung bezeichnet werden kann) als kapazitiv wirkender Sensor realisiert werden.

Die in Bezug auf Figuren 3a bis 3d beschriebenen Ausgestaltungen dienen sozusagen zur Realisierung eines kapazitiv wirkenden Schalters. Der kapazitiv wirkende Schalter kann kombiniert werden mit der induktiv wirkenden Drehwinkelermittlung, wie sie in Bezug auf Figur 1 beschrieben wurde. Beispielsweise kann die Auswerteeinheit den Drehwinkel des Rotors (bis zu einer vollständigen Umdrehung von 360°) unter Berücksichtigung von induktiver Kopplung ermitteln. Unter zusätzlicher Berücksichtigung des Werts des Zählers kann die insgesamt erfolgte Drehung des Rotors mit Werten von über 360° effizient ermittelt werden. Es wird sozusagen ein kapazitiv wirkender Schalter mit einer induktiven Drehwinkelermittlung kombiniert. Auf diese Weise kann eine induktiv arbeitende Drehwinkelermittlung bestmöglich mit einem kapazitiv wirkenden Schalter bei einer vorbestimmten Drehposition (beispielsweise bei 40° oder 360°) kombiniert werden. Das heißt, ein Einsatz des Schalters mit metallisch leitend ausgestalteten Flügeln als induktiver Positionssensor (CIPOS) ist möglich.

Gemäß einem Beispipel liegt der größte Eindeutigkeitsbereich auf der Seite der neun Rotorflügel und ist daher 360°/9=40°. In diesem Fall erkennt der Index-Schalter auch unter Plausibilisierung die Geradeausfahrt. Hiernach wird mittels des Zählers gezählt, sobald eine vorbestimmte Drehposition, beispielsweise ein Winkelsegment von 40° erreicht oder überschritten wird (d.h., es werden die Überklapper der 40° Spur gezählt). Der Lenkwinkel ist somit Lenkwinkel=n*40°+gemessener Winkel des Drehwinkelsensors (z.B. CIPOS) innerhalb des 40° Segments.

Anders ausgedrückt wird gemäß diesem Beispiel erfasst, wenn ein Winkelsegment (von z.B. 40°) erreicht oder überschritten wird. Sobald das Winkelsegment erreicht oder überschritten wird, wird in Abhängigkeit der Richtung der Überschreitung der Zähler erhöht oder vermindert. Dieser Zähler arbeitet kapazitiv. Wurden beispielsweise fünf Winkelsegmente erreicht oder überschritten, so kann anhand des Zählers ein ungefährer Drehwinkel von 5*40°=200° ermittelt werden. Anhand der induktiv arbeitenden Drehwinkelermittlungsvorrichtung kann der genaue Lenkwinkel ermittelt werden. Wird beispielsweise mit der Drehwinkelermittlungsvorrichtung ein Winkel von 12° ermittelt, so ergibt sich ein Lenkwinkel von 5*40°+12°=212°.

Das heißt, eine kapazitive Modulation für einen beispielsweise parallel zum induktiven Sensor arbeitenden kapazitiven Sensor oder Schalter wird dadurch erzielt, dass der Rotor so gestaltet wird, dass zwischen Rotor und Stator des Winkelsensors oder Winkel-Schalters eine Kodierung der Rotorflügel vorgenommen wird. So können einzelne hervorzuhebende Flügel des Rotors von anderen nicht zu kodierenden Flügeln unterschieden werden.

Durch die beschriebene Realisierung kann die Signalamplitude der Sensorik durch Anordnung eines speziellen Musters oder einer speziellen Abfolge (Codierung) von markierten und nicht markierten Flügeln erhöht werden. Zugleich kann der Schaltpunkt weiterhin nur ein einziges Mal auf dem gesamten Umfang von 360° sichergestellt sein. Die Verbesserung, gegenüber einer Variante mit lediglich einem einzigen markierten Flügel kann dadurch entstehen, dass nicht nur ein einziger sondern mehrere Flügel zu einer Auswertung beitragen. Hierdurch wird die Signalamplitude deutlich erhöht, was die Funktion eines solchen Sensors robuster und präziser gestaltet.

## Patentansprüche

1. Positionserfassungsvorrichtung für einen Drehwinkelsensor, wobei die Positionserfassungsvorrichtung aufweist:
mindestens einen Stator (200);
mindestens einen Rotor (100), wobei der mindestens eine Rotor (100) einen Grundkörper (110) und mehrere sich von dem Grundkörper (110) radial nach außen erstreckende Rotorflügel (120a, 120b) aufweist, wobei mehrere erste Rotorflügel (120a) der mehreren Rotorflügel (120a, 120b) von mehreren zweiten Rotorflügeln (120b) der mehreren Rotorflügel (120a, 120b) verschieden ausgebildet sind; und
eine Auswerteeinheit, die ausgebildet ist, zu erfassen, wenn die mehreren ersten Rotorflügel (120a) einen vorbestimmten Drehwinkel erreichen, erreicht haben oder überschreiten.

2. Positionserfassungsvorrichtung nach Anspruch 1, wobei die Auswerteeinheit ausgebildet ist, zu erfassen, wenn die Gesamtheit der mehreren ersten Rotorflügel (120a) einen vorbestimmten Drehwinkel erreicht, erreicht hat oder überschreitet.

3. Positionserfassungsvorrichtung nach Anspruch 1 oder 2, wobei die mehreren ersten Rotorflügel (120a) eine andere Form und/oder eine andere Oberfläche aufweisen als die mehreren zweiten Rotorflügel (120b).

4. Positionserfassungsvorrichtung nach einem der Ansprüche 1 bis 3, wobei
die mehreren ersten Rotorflügel (120a) als Hohlflügel und die mehreren zweiten Rotorflügel (120b) als Vollflügel ausgebildet sind; oder
die mehreren ersten Rotorflügel (120a) als Vollflügel und die mehreren zweiten Rotorflügel (120b) als Hohlflügel ausgebildet sind.

5. Positionserfassungsvorrichtung nach einem der Ansprüche 1 bis 4, wobei
die mehreren ersten Rotorflügel (120a) länger als die mehreren zweiten Rotorflügel (120b) ausgebildet sind; oder
die mehreren ersten Rotorflügel (120a) kürzer als die mehreren zweiten Rotorflügel (120b) ausgebildet sind.

6. Positionserfassungsvorrichtung nach einem der Ansprüche 1 bis 5,
wobei die mehreren ersten Rotorflügel (120a) und die mehreren zweiten Rotorflügel (120b) in einer vorbestimmten Abfolge relativ zueinander angeordnet sind.

7. Positionserfassungsvorrichtung nach Anspruch 6,
wobei die Anzahl der mehreren Rotorflügel (120a, 120b) neun, die Anzahl der mehreren ersten Rotorflügel (120a) drei und die Anzahl der mehreren zweiten Rotorflügel (120b) sechs ist und wobei die vorbestimmte Abfolge der mehreren ersten Rotorflügel (120a) und der mehreren zweiten Rotorflügel (120b) relativ zueinander wie folgt ist: zweiter Rotorflügel, erster Rotorflügel, zweiter Rotorflügel, zweiter Rotorflügel, erster Rotorflügel, zweiter Rotorflügel, zweiter Rotorflügel, zweiter Rotorflügel, erster Rotorflügel oder Verschiebungen dieser Abfolge.

8. Positionserfassungsvorrichtung nach einem der Ansprüche 1 bis 7,
wobei die Auswerteeinheit ausgebildet ist, ein Schaltsignal zu erzeugen, wenn die mehreren ersten Rotorflügel (120b) den vorbestimmten Drehwinkel erreichen, erreicht haben oder überschreiten.

9. Positionserfassungsvorrichtung nach Anspruch 8, wobei die mehreren ersten Rotorflügel (120a) und die mehreren zweiten Rotorflügel (120b) derart relativ zueinander angeordnet sind, dass die Auswerteeinheit erkennen kann, dass das Schaltsignal lediglich einmal pro vollständiger Drehung des Rotors erzeugt wird.

10. Positionserfassungsvorrichtung nach einem der Ansprüche 1 bis 9, wobei die mehreren ersten Rotorflügel (120a) zu einem ersten Kondensator zusammengeschaltet sind und die mehreren zweiten Rotorflügel (120b) zu einem zweiten Kondensator zusammengeschaltet sind.

11. Drehwinkelsensor aufweisend:
die Positionserfassungsvorrichtung nach einem der Ansprüche 1 bis 10;
eine Drehwinkelermittlungsvorrichtung aufweisend:
den mindestens einen Stator (200);
den mindestens einen Rotor (100);
die Auswerteeinheit, wobei die Auswerteeinheit ausgebildet ist, ausgehend von einer Referenzposition, einen Drehwinkel des mindestens einen Rotors (100) relativ zu dem mindestens einen Stator (200) zu ermitteln.

12. Drehwinkelsensor nach Anspruch 11,
wobei die Auswerteeinheit ausgebildet ist, den Drehwinkel des mindestens einen Rotors (100) basierend auf einer induktiven Kopplung zwischen dem mindestens einen Rotor (100) und dem mindestens einen Stator (200) zu ermitteln.

13. System aufweisend einen Drehwinkelsensor nach Anspruch 11 oder 12 und ein drehendes Element, wobei der mindestens eine Stator (200) des Drehwinkelsensors ortsfest relativ zu dem drehenden Element angeordnet ist und der mindestens eine Rotor (100) drehfest mit dem drehenden Element verbunden ist und die Auswerteeinheit des Drehwinkelsensors ausgebildet ist, aus dem ermittelten Drehwinkel des mindestens einen Rotors (100) ein auf das drehende Element einwirkendes Drehmoment zu ermitteln.

## Claims

1. Position detection device for a rotation angle sensor, wherein the position detection device features:
at least one stator (200);
at least one rotor (100), wherein the at least one rotor (100) features a base body (110) and several rotor blades (120a, 120b) extending radially outwards from the base body (110), wherein several first rotor blades (120a) of the several rotor blades (120a, 120b) are designed so as to differ from several second rotor blades (120b) of the several rotor blades (120a, 120b); and
an evaluation unit that is designed to record when the several first rotor blades (120a) reach, have reached or exceed, a predefined rotation angle.

2. Position detection device in accordance with claim 1, wherein the evaluation unit is designed to record when the entirety of the several first rotor blades (120a) reaches, has reached or exceeds a predefined rotation angle.

3. Position detection device in accordance with claim 1 or 2, wherein the several first rotor blades (120a) feature a different shape and/or a different surface than the several second rotor blades (120b).

4. Position detection device in accordance with one of claims 1 through 3, wherein the several first rotor blades (120a) are designed as hollow blades and the several second rotor blades (120b) as full blades; or
the several first rotor blades (120a) are designed as full blades and the several second rotor blades (120b) as hollow blades.

5. Position detection device in accordance with one of claims 1 through 4, wherein the several first rotor blades (120a) are designed to be longer than the several second rotor blades (120b); or
the several first rotor blades (120a) are designed to be shorter than the several second rotor blades (120b).

6. Position detection device in accordance with one of claims 1 through 5, wherein the several first rotor blades (120a) and the several second rotor blades (120b) are arranged in a predefined sequence relative to each other.

7. Position detection device in accordance with claim 6,
wherein the number of the several rotor blades (120a, 120b) is nine, the number of the several first rotor blades (120a) is three and the number of the several second rotor blades (120b) is six and wherein the predefined sequence of the several first rotor blades (120a) and the several second rotor blades (120b) relative to each other is: second rotor blade, first rotor blade, second rotor blade, second rotor blade, first rotor blade, second rotor blade, second rotor blade, second rotor blade, first rotor blade or shifts of this sequence.

8. Position detection device in accordance with one of claims 1 through 7,
wherein the evaluation unit is designed to generate a switching signal when the several first rotor blades (120a) reach, have reached or exceed the predefined rotation angle.

9. Position detection device in accordance with claim 8, wherein the several first rotor blades (120a) and the several second rotor blades (120b) are arranged relative to each other in such a way that the evaluation unit can detect that the switching signal is generated only once per complete rotation of the rotor.

10. Position detection device in accordance with one of claims 1 through 9, wherein the several first rotor blades (120a) are interconnected to form a first capacitor and the several second rotor blades (120b) are interconnected to form a second capacitor.

11. Rotation angle sensor featuring:
the position detection device in accordance with one of claims 1 through 10;
a rotation angle detection device, featuring:
the at least one stator (200);
the at least one rotor (100);
the evaluation unit, wherein the evaluation unit is designed to determine a rotation angle of the at least one rotor (100) relative to the at least one stator (200) starting from a reference position.

12. Rotation angle sensor in accordance with claim 11,
wherein the evaluation unit is designed to determine the rotation angle of the at least rotor (100) based on an inductive coupling between the at least one rotor (100) and the at least one stator (200).

13. System featuring a rotation angle sensor in accordance with claim 11 or 12 and a rotating element, wherein the at least one stator (200) of the rotation angle sensor is arranged in a fixed position relative to the rotating element and the at least one rotor (100) is connected in a non-rotating manner to the rotating element and the evaluation unit of the rotation angle sensor is designed to determine from the determined rotation angle of the at least one rotor (100) a torque acting on the rotating element.

## Revendications

1. Dispositif de détection de position pour un capteur d'angle de rotation, le dispositif de détection de position comprenant :
au moins un stator (200) ;
au moins un rotor (100), un rotor (100) au moins comprenant un corps de base (110) et plusieurs pales de rotor (120a, 120b) s'étendant radialement vers l'extérieur à partir du corps de base (110), plusieurs premières pales de rotor (120a) des multiples pales de rotor (120a, 120b) étant conçues différemment de plusieurs secondes pales de rotor (120b) des multiples pales de rotor (120a, 120b) ; et
une unité d'évaluation conçue pour détecter lorsque les multiples premières pales de rotor (120a) atteignent, ont atteint ou dépassent un angle de rotation prédéterminé.

2. Dispositif de détection de position selon la revendication 1 dans lequel l'unité d'évaluation est configurée pour détecter lorsque l'ensemble des multiples premières pales de rotor (120a) atteint, a atteint ou dépasse un angle de rotation prédéterminé.

3. Dispositif de détection de position selon la revendication 1 ou 2 dans lequel les multiples premières pales de rotor (120a) présentent une forme et/ou une surface différente de celle des multiples deuxièmes pales de rotor (120b).

4. Dispositif de détection de position selon l'une des revendications 1 à 3 dans lequel
les multiples premières pales de rotor (120a) sont des pales creuses et les multiples secondes pales de rotor (120b) des pales pleines ; ou
les multiples premières pales de rotor (120a) sont des pales pleines et les multiples deuxièmes pales de rotor (120b) sont des pales creuses.

5. Dispositif de détection de position selon l'une des revendications 1 à 4 dans lequel
les multiples premières pales de rotor (120a) sont plus longues que les multiples deuxièmes pales de rotor (120b) ; ou
les multiples premières pales de rotor (120a) sont plus courtes que les multiples deuxièmes pales de rotor (120b).

6. Dispositif de détection de position selon l'une des revendications 1 à 5 dans lequel les multiples premières pales de rotor (120a) et les multiples deuxièmes pales de rotor (120b) sont agencées dans un ordre prédéterminé les unes par rapport aux autres.

7. Dispositif de détection de position selon la revendication 6
dans lequel le nombre de pales de rotor (120a, 120b) est de neuf, le nombre de premières pales de rotor (120a) est de trois et le nombre de secondes pales de rotor (120b) est de six, et dans lequel l'ordre prédéterminé des multiples premières pales de rotor (120a) et des multiples secondes pales de rotor (120b) les unes par rapport aux autres est comme suit : seconde pale de rotor, première pale de rotor, seconde pale de rotor, seconde pale de rotor, seconde pale de rotor, première pale de rotor, ou des décalages de cette séquence.

8. Dispositif de détection de position selon l'une des revendications 1 à 7 dans lequel l'unité d'évaluation est configurée pour générer un signal de commutation lorsque les multiples premières pales de rotor (120a) atteignent, ont atteint ou dépassent l'angle de rotation prédéterminé.

9. Dispositif de détection de position selon la revendication 8 dans lequel les multiples premières pales de rotor (120a) et les multiples deuxièmes pales de rotor (120b) sont disposées les unes par rapport aux autres de telle sorte que l'unité d'évaluation peut détecter que le signal de commutation est généré seulement une fois par rotation complète du rotor.

10. Dispositif de détection de position selon l'une des revendications 1 à 9 dans lequel les multiples premières pales de rotor (120a) sont interconnectées pour constituer un premier condenseur et les multiples deuxièmes pales de rotor (120b) sont interconnectées pour constituer un deuxième condenseur.

11. Capteur d'angle de rotation comportant :
le dispositif de détection de position selon l'une des revendications 1 à 10 ;
un dispositif de détection d'angle de rotation comportant :
au moins un stator (200) ;
au moins un rotor (100) ;
l'unité d'évaluation, celle-ci étant configurée pour déterminer, à partir d'une position de référence, un angle de rotation d'au moins un rotor (100) par rapport à au moins un stator (200).

12. Capteur d'angle de rotation selon la revendication 11,
l'unité d'évaluation étant configurée pour déterminer l'angle de rotation d'au moins un rotor (100) sur la base d'un couplage inductif entre au moins un rotor (100) et au moins un stator (200).

13. Système comportant un capteur d'angle de rotation selon la revendication 11 ou 12 et un élément rotatif, au moins un stator (200) du capteur d'angle de rotation étant disposé de manière fixe par rapport à l'élément rotatif et au moins un rotor (100) étant relié de manière solidaire en rotation à l'élément rotatif et l'unité d'évaluation du capteur d'angle de rotation étant configurée pour déterminer un couple agissant sur l'élément rotatif à partir de l'angle de rotation déterminé d'au moins un rotor (100).
